# EUROPÄISCHE PATENTSCHRIFT

(11) **EP 0 711 023 B1**
(45) Veröffentlichungstag und Bekanntmachung des Hinweises auf die Patenterteilung: **25.04.2001**
(21) Anmeldenummer: 95202924.7
(22) Anmeldetag: 30.10.1995
(51) Int. Cl.: H02K 17/02

(54) **Induktionsmotor mit axialem Luftspalt**
Axial air gap asynchronous motor
Moteur asynchrone à entrefer axial

(30) Priorität: 07.11.1994 DE 4439690
(43) Veröffentlichungstag der Anmeldung: 08.05.1996
(60) Teilanmeldung: 00121121.8
(73) Patentinhaber: Philips Corporate Intellectual Property GmbH, 52064 Aachen (DE); Koninklijke Philips Electronics N.V., 5621 BA Eindhoven (NL)
(72) Erfinder: Gerling, Dieter, Dr.-Ing., Röntgenstrasse 24, D-22335 Hamburg (DE); Lürkens, Peter, Dr.-Ing., Röntgenstrasse 24, D-22335 Hamburg (DE)
(74) Vertreter: van der Veer, Johannis Leendert

(56) Entgegenhaltungen:
- EP-A- 0 487 141
- DD-A- 120 576
- DE-C- 843 719
- DE-C- 1 763 113
- US-A- 2 880 335
- I.E.E.E. TRANSACTIONS ON MAGNETICS, Bd. 24, Nr. 1, Januar 1988, N.Y. USA, Seiten 635-638, XP002010651 S.KUBZDELA &AL: "Magnetodielectrics in Induction Motors with disk Rotor"

## Beschreibung

Die Erfindung bezieht sich auf einen Induktionsmotor mit einem Pole aufweisenden Ständer und mit einem in einem Radialluftspalt gegenüber den Polen angeordneten Läufer, der aus elektrisch gut leitfähigem und aus magnetisch gut leitfähigem Werkstoff gefertigt ist, wobei der elektrisch gut leitfähige Werkstoff auf der dem Ständer zugewandten Seite des Läufers liegt und ein kleineres spezifisches Gewicht aufweist als der magnetisch gut leitfähige hochpermeable Werkstoff, und wobei der Außenradius des ring- oder scheibenförmig ausgebildeten, magnetisch gut leitfähigen hochpermeablen Werkstoffes kleiner ist als der Außenradius des ring- oder scheibenförmig ausgebildeten, elektrisch gut leitfähigen Werkstoffes.

Ein derartiger Induktionsmotor ist aus dem Artikel I.E.E.E Transactions on Magnetics, Bd. 24, Nr. 1, Januar 1988, N.Y. USA, Seiten 635-638 bekannt.

Ein weiterer Induktionsmotor ist z.B. durch die EP 0 487 141 A2 bekannt geworden. Dieser bekannte Motor ist Teil eines Gebläseaggregates zum Erzeugen von Gasströmen, insbesondere für Staubsauger, und weist ein Verdichterlaufrad auf, welches gleichzeitig elektromagnetisch wirksam ist und zusammen mit elektromagnetisch aktiven Teilen des Motorständers das Drehmoment des Verdichterlaufrades erzeugt. Der elektromagnetisch wirksame Teil des Verdichterlaufrades ist eine in der Radialebene gegenüber dem Ständer angeordnete leitfähige Platte, die den Radialluftspalt läuferseitig begrenzt. Die elektrisch leitfähige Platte des Läufers ist z.B. eine Basisplatte des Verdichterlaufrades und besteht z.B. aus Aluminium. Diese elektrisch leitfähige Basisplatte des Läufers ist auf ihrer vom Luftspalt abgelegenen Seitenfläche mit einer Platte aus hochpermeablem, d.h. magnetisch gut leitfähigem Werkstoff, z.B. aus massisem Eisen, hinterlegt.

Durch die DE-PS 843 719 ist ein Induktionsmotor mit einem gegenüber der Stirnseite der bewickelten Pole seines Stators angeordneten scheibenförmigen Kurzschlußläufer bekannt geworden. Dabei besteht der Kurzschlußläufer z.B. aus einer Eisenscheibe, die wenigstens auf der dem Stator zugewandten Seite mit einem Cu-Mantel überdeckt ist. Dieser Cu-Mantel kann aus einer aufgespritzten Cu-Schicht oder aus zwei zu verschiedenen Seiten der Fe-Scheibe angeordneten Cu-Scheiben bestehen. Bei einer dieser bekannten Ausführungsformen ist die Fe-Scheibe auf beiden Seiten mit Cu-Scheiben versehen, deren umgebördelte Ränder miteinander verlötet sind. Diese Cu-Scheiben können auch durch eine Anzahl Cu-Niete miteinander verbunden werden. Die induzierten Kurzschlußströme gehen dann durch die beiden Scheiben außen durch die Lötstelle und weiter innen durch die Niete.

Werden derartige Axial-Induktionsmotoren bei hohen Drehzahlen eingesetzt (z.B. Drehzahlen > 20.000 U/min), so treten Festigkeitsprobleme in den Rotorschichten auf. Die mechanischen Spannungen in rotierenden Scheiben lassen sich wie folgt berechnen: Ist der Außendurchmesser ungefähr gleich dem Innendurchmesser, so gilt σ = 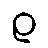 ν² , bei einem Innendurchmesser 0 gilt σ = 0,4125 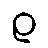 ν² (Dubbel). Hierbei ist 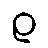 das spezifische Gewicht und ν die Umfangsgeschwindigkeit am Außendurchmesser. Die maximal zulässige Drehzahl von rotierenden Scheiben ist also durch die maximale Umfangsgeschwindigkeit aufgrund der hierbei auftretenden mechanischen Spannungen in den Werkstoffen bestimmt. Aus den Formeln ergibt sich somit, daß als leitfähiges Rotormaterial Aluminium (z.B. als Druckguß) statt Kupfer sinnvoll ist, da bei ähnlicher Festigkeit das spezifische Gewicht wesentlich geringer ist. Diese Vorgehensweise entspricht auch dem Stand der Technik.

Bei den hier zur Diskussion stehenden Rotoren besitzt die z.B. aus Eisen oder einer Eisenlegierung bestehende hochpermeable (magnetisch gut leitfähige) Rotorschicht einerseits ein sehr viel größeres spezifisches Gewicht als die z.B. aus Aluminium bestehende elektrisch gut leitende Schicht. Andererseits ist die maximal zulässige mechanische Spannung der hochpermeablen Rotorschicht nicht soviel größer, daß sich im Vergleich zur elektrisch gut leitenden Schicht eine wenigstens gleich große maximal zulässige Umfangsgeschwindigkeit ergibt. Daraus folgt, daß die kritische Materialbeanspruchung in der hochpermeablen Rotorschicht zu finden ist.

Durch die DE-A-17 63 113 ist ein Hysteresemotor bekannt geworden. Auch hierbei handelt es sich um einen Scheibenmotor mit einem in einer Radialebene angeordneten Luftspalt, wobei der Luftspaltfluß in axialer Richtung zwischen Ständer- und Läuferscheibe übertritt. Der Läufer besitzt einen z.B. aus Duraluminium bestehenden Tragkörper, der sich von der Läuferachse in radialer Richtung zum Umfang hin nach Maßgabe eines Körpers gleicher Festigkeit verjüngt. In diesen Tragkörper ist einseitig ein aktiver, ferromagnetischer Ring derart eingebettet, daß eine seiner Seiten am Luftspalt, benachbart dem Ständerjoch, zu liegen kommt. Im Gegensatz dazu besitzen die eingangs beschriebenen gattungsgemäßen Bauarten jedoch einen Rotor, der auf seiner dem Ständer benachbarten Seite keinen magnetisch gut leitenden Werkstoff aufweisen darf. Auf dieser Seite befindet sich vielmehr nur elektrisch gut leitender Werkstoff.

Der Erfindung liegt die Aufgabe zugrunde, einen fertigungstechnisch einfachen Induktionsmotor der eingangs genannten Art zu schaffen, bei welchem trotz der hohen Drehzahlen keine Festigkeitsprobleme bei den hierbei verwendeten unterschiedlichen Läuferwerkstoffen auftreten.

Diese Aufgabe wird gemäß der Erfindung dadurch gelöst, daß der ring- oder scheibenförmige hochpermeable Werkstoff auf die dem Luftspalt abgewandte Seite des elektrisch gut leitfähigen Werkstoffes aufgesetzt ist.

Dadurch ergibt sich eine einfache Fertigung und Montage.

Die hohen mechanischen Spannungen in der hochpermeablen Rotorschicht werden dadurch reduziert, daß die Ausdehnung dieser Rotorschicht in radialer Richtung geringer ist als die Ausdehnung der elektrisch gut leitfähigen Schicht. Durch diese Maßnahme ist die Umfangsgeschwindigkeit im hochpermeablen Werkstoff geringer als die im elektrisch leitfähigen Werkstoff, so daß beide Werkstoffe bis an die Grenze ihrer jeweiligen mechanischen Belastbarkeit ausgenutzt werden können. Je nach den gewählten Werkstoffen werden somit die Außenradien der beiden scheiben- bzw. ringförmigen Werkstoffe entsprechend aufeinander abgestimmt.

Bei der Bauart gemäß der DE-OS 17 63 113 ist der Radius des magnetisch leitfähigen Ringes zwar auch geringer als der des elektrisch leitfähigen Trägers, jedoch nicht aus mechanischen, sondern aus elektromagnetischen Gründen. Dort wird das Drehmoment in dem magnetisch leitfähigen ferromagnetischen Ring durch die Remanenz des Magnetmaterials erzeugt, bei der Bauart gemäß der Erfindung jedoch in der elektrisch leitfähigen Schicht des Läufers durch elektrische Ströme. Dort läuft der Läufer synchron mit dem Drehfeld um, bei der Bauart gemäß der Erfindung läuft der Rotor langsamer als das Drehfeld. Bei der bekannten Bauart muß, wie bereits erwähnt, im Gegensatz zur Bauart gemäß der Erfindung der magnetisch leitfähige Ring am Luftspalt selbst liegen. Dieser geringe Abstand ist für einen Hysteresemotor zweckmäßig, da das Drehmoment nur durch Effekte im ferromagnetischen Teil erzeugt wird und daher eine gute Kopplung des ferromagnetischen Teils zum Stator günstig ist. Im stationären Betrieb wirken sich Wirbelströme eher negativ aus und sollen vermieden werden. Bei der Bauart gemäß der Erfindung werden permanent Wirbelströme in der elektrisch leitfähigen Schicht erzeugt, die hierbei erst das Drehmoment erzeugen.

In einer weiteren Ausgestaltung der Erfindung ist vorgesehen, daß der hochpermeable Werkstoff aus gewickeltem Blech oder Draht aufgebaut ist. Gegenüber einer Segmentierung hat diese Bauart den Vorteil, daß die Flußführung im Rotorjoch nicht durch Segmentgrenzen unterbrochen wird, jedoch ist das zur Verfügung stehende Volumen bei dieser Bauweise nur teilweise mit hochpermeablem Material gefüllt. Bei dieser Bauweise kann sich das Joch selbst tragen, so daß kein umgebendes Material wie bei einer Segment-Bauweise benötigt wird. Gegenüber dem massiven oder geblechten Rotorjoch hat der Drahtwickel den Vorteil, daß bei einer Überbeanspruchung jede Faser, unter Aufbringung einer hohen Energie, einzeln zerstört werden muß, so daß von einem defekten Rotor dieser Bauart weniger Gefahrenpotential ausgeht. Bei Materialfehlern im hochpermeablen Material besteht der Vorteil, daß nur die Faser mit dem Materialfehler zerstört wird, während alle anderen Fasern erhalten bleiben. Dies beeinträchtigt weder die Sicherheit noch das Betriebsverhalten des Motors. Vorteile dieser Lösung sind die reduzierten Wirbelstromverluste und die sehr einfache Herstellbarkeit.

Eine weitere Ausgestaltung der Erfindung sieht vor, daß der hochpermeable Werkstoff aus axial geschichten Blechen aufgebaut ist. Ähnlich wie bei einer Segmentierung läßt sich die Masse der auftretenden Bruchstücke bei Versagen des Materials kontrollieren. Im Gegensatz zu einer Segmentierung kann sich der hochpermeable Teil selbst tragen.

Der beschriebene Motor wird vorzugsweise verwendet als Antriebsmotor in einem Staubsauger.

In der Zeichnung sind in den Fig. 1 bis 4 Ausführungsbeispiele des Gegenstandes gemäß der Erfindung schematisch dargestellt.
Fig. 1 zeigt eine Seitenansicht eines Induktionsmotors mit in einem Radialspalt angeordneten Läufer,
Fig. 2 zeigt eine Draufsicht des aus zwei Werkstoffen hergestellten Läufers,
Fig. 3 zeigt einen Querschnitt eines Läufers.
Fig. 4 zeigt einen Staubsauger

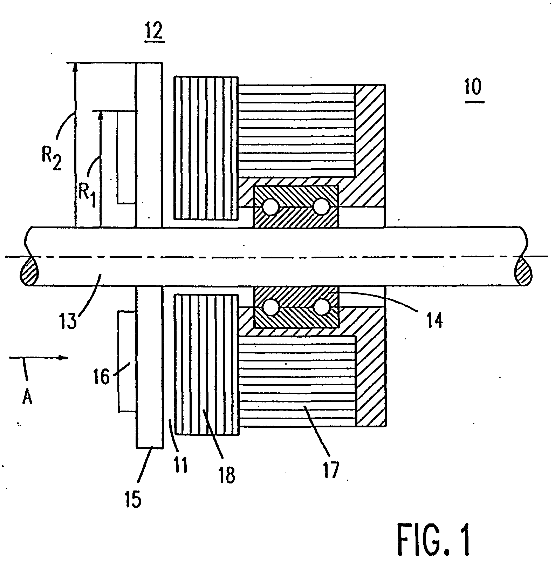

Der Axialfluß-Induktionsmotor gemäß Fig. 1 besitzt einen Ständer 10 und einen in einem Radialluftspalt 11 angeordneten Läufer 12, der auf einer Welle 13 sitzt und über ein Lager 14 drehbar gelagert ist. Der Läufer 12 ist aus zwei Werkstoffen aufgebaut, und zwar aus einem elektrisch gut leitfähigen Werkstoff 15 (Aluminium) und aus einem magnetisch gut leitfähigen Werkstoff 16 (Eisen). Der magnetisch gut leitfähige Werkstoff 16 hat ein größeres spezifisches Gewicht als der elektrisch gut leitfähige Werkstoff 15, ist ringförmig ausgebildet und so auf den Läufer 12 aufgesetzt, daß auf der dem Ständer 10 zugewandten Seite nur eine Schicht aus elektrisch gut leitfähigem Werkstoff liegt. Der äußere Radius R₁ des magnetisch gut leitfähigen Werkstoffes ist kleiner als der äußere Radius R₂ des elektrisch gut leitfähigen Werkstoffes.

Der Ständer 10 besitzt eine durch Wickeln eines Elektroblechstreifens gebildete Eisenhülse 17, in welche nicht dargestellte Nuten zur Aufnahme einer Wicklung 18 eingebracht sind. Im Betrieb werden in der aus elektrisch gut leitfähigem Werkstoff 15 gebildeten Scheibe Wirbelströme erzeugt, während der magnetisch gut leitfähige, hochpermeable Werkstoff 16 zur Fortleitung des magnetischen Flusses dient.

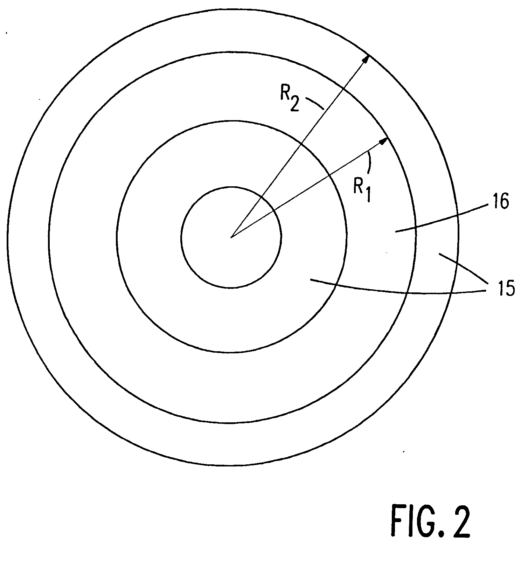

Fig. 2 zeigt eine Draufsicht des Läufers aus Richtung A gemäß Fig. 1.

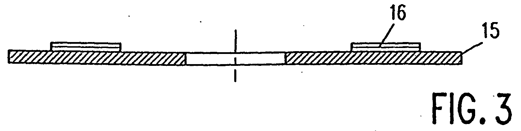

Fig. 3 zeigt einen Querschnitt des Läufers, bei dem der hochpermeable, aus axial geschichteten Blechen bestehende Werkstoff 16''' auf den gut leitfähigen Werkstoff 15 aufgesetzt ist.

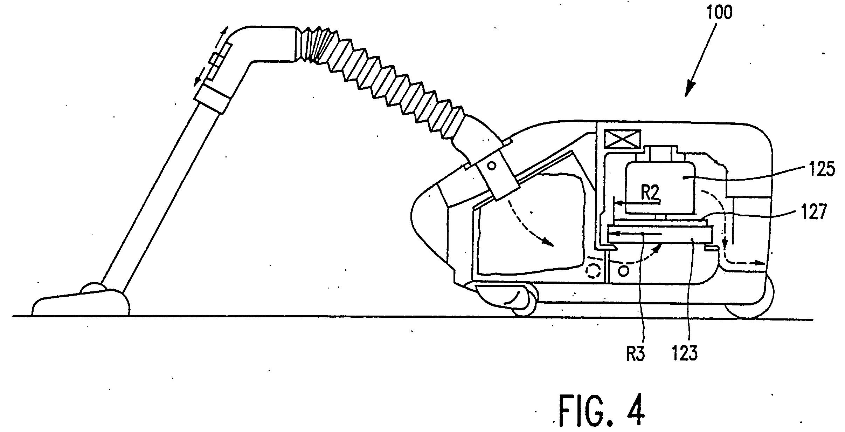

Fig. 4 zeigt einen Staubsauger mit einem Induktionsmotor.

## Patentansprüche

1. Induktionsmotor mit einem Pole aufweisenden Ständer (10) und mit einem in einem Axialluftspalt (11) gegenüber den Polen angeordneten Läufer (12), der aus elektrisch gut leitfähigem und aus magnetisch gut leitfähigem Werkstoff (15, 16) gefertigt ist, wobei der elektrisch gut leitfähige Werkstoff (15) auf der dem Ständer (10) zugewandten Seite des Läufers (12) liegt und ein kleineres spezifisches Gewicht als der magnetisch gut leitfähige hochpermeable Werkstoff (16) aufweist, wobei der Außenradius (R₁) des ring- oder scheibenförmig ausgebildeten, magnetisch gut leitfähigen hochpermeablen Werkstoffes (16) kleiner ist als der Außenradius (R₂) des ring- oder scheibenförmig ausgebildeten, elektrisch gut leitfähigen Werkstoffes (15), dadurch gekennzeichnet, daß der ring- oder scheibenförmige hochpermeable Werkstoff (16) auf die dem Luftspalt abgewandte Seite des elektrisch gut leitfähigen Werkstoffes (15) aufgesetzt ist.

2. Induktionsmotor nach Anspruch 1, dadurch gekennzeichnet, daß der hochpermeable Werkstoff (16) aus massivem Werkstoff, z.B. Eisen, hergestellt ist.

3. Induktionsmotor nach Anspruch 1, dadurch gekennzeichnet, daß der hochpermeable Werkstoff aus gewickeltem Blech (16') oder aus gewickeltem Draht (16") aufgebaut ist.

4. Induktionsmotor nach Anspruch 1, dadurch gekennzeichnet, daß der hochpermeable Werkstoff aus axial geschichteten Blechen (16"') aufgebaut ist.

5. Staubsauger mit einem Induktionsmotor nach Anspruch 1.

## Claims

1. An induction motor comprising a stator (10) having poles and a rotor (12) arranged in a radial air gap (11) opposite the poles, which rotor is made of a material (15) having a high electric conductivity and of a material (16) having a high magnetic conductivity, the material (15) having a high electric conductivity being situated on the side of the rotor (12) facing the stator (10), and its specific weight being smaller than that of the highly permeable material (16) having a high magnetic conductivity, the outer radius (R₁) of the ring or disc-shaped highly permeable material (16) having a high magnetic conductivity being smaller tan the outer radius (R2) of the ring or disc-shaped material (15) having a high electric conductivity, characterised in that the ring or disc-shaped highly permeable material (16) is provided on the side of the highly electroconductive material (15) facing away from the air gap.

2. An induction motor as claimed in claim 1, characterised in that the highly permeable material (16) is made from a solid material, for example iron.

3. An induction motor as claimed in claim 1, characterised in that the highly permeable material is composed of wound sheet metal (16') or wound wire (16").

4. An induction motor as claimed in claim 1, characterised in that the highly permeable material is composed of axially laminated sheets (16''').

5. A vacuum cleaner comprising an induction motor as claimed in Claim 1.

## Revendications

1. Moteur à induction avec un stator (10) présentant un pôle et un rotor (12) disposé dans un entrefer axial (11) par rapport aux pôles qui est fabriqué en un matériau bien conducteur électriquement et un matériau bien conducteur magnétiquement (15,16), le matériau bien conducteur électriquement (15) étant appliqué sur la face du rotor (12) tournée vers le stator (10) et présentant un poids spécifique inférieur au matériau très perméable bien conducteur magnétiquement (16), le rayon externe (R₁) du matériau (16) très perméable bien conducteur magnétiquement conçu en forme de disque ou d'anneau étant inférieur au rayon externe (R₂) du matériau (15) bien conducteur électriquement conçu en forme d'anneau ou de disque, caractérisé en ce que le matériau (16), très perméable en forme d'anneau ou de disque est appliqué sur la face opposée à l'entrefer du matériau (15) bien conducteur électriquement.

2. Moteur à induction selon la revendication 1, caractérisé en ce que le matériau (16) très perméable est fabriqué en matériau massif, par exemple en fer.

3. Moteur à induction selon la revendication 1, caractérisé en ce que le matériau très perméable est conçu en tôle enroulée (16') ou en fil enroulé (16").

4. Moteur à induction selon la revendication 1, caractérisé en ce que le matériau très perméable est conçu en tôles (16"') disposées en couches axiales.

5. Aspirateur avec un moteur à induction selon la revendication 1.
